# EUROPÄISCHE PATENTANMELDUNG

(11) **EP 2 143 549 A1**
(43) Veröffentlichungstag der Anmeldung: **13.01.2010**
(21) Anmeldenummer: 08012214.6
(22) Anmeldetag: 07.07.2008
(51) Int. Cl.: B29C 51/02, B41M 7/00, B65B 9/04, B65B 61/02, G06T 3/00, B65D 75/32

(54) **Tiefziehfolie für Blisterverpackungen**

(71) Anmelder: Constantia Hueck Folien GmbH & Co. KG, 92712 Pirk (DE)
(72) Erfinder: Kaczcmarek, Dirk, Dr., 90637 Weiden i.d.OPf. (DE); Krauß, Wolfgang, 92702 Kohlberg (DE); Reich, Peter, 92172 Pirk (DE)
(74) Vertreter: Landgraf, Elvira

(57) **Zusammenfassung**

Tiefziehfolie, insbesondere eine Bodenfolie zur Herstellung von Blisterverpackungen, dadurch gekennzeichnet, dass die Tiefziehfolie im nicht tiefgezogenem Zustand in den Bereichen, die im Folgenden tiefgezogen werden sollen mit einer Bedruckung versehen ist, die nach dem Tiefziehvorgang lesbar ist.

## Beschreibung

Die Erfindung betrifft eine bedruckte tiefziehfähige Bodenfolie eines Blisters mit erhöhter Fälschungssicherheit.

Blister werden hauptsächlich zur Verpackung von Medikamenten, insbesondere Tabletten oder Dragees oder medizinischen Produkten oder zur Verpackung von anderen Produkten, wie beispielsweise Ersatzteilen, Nachfüllpackungen, Lebensmittel oder technischen Geräten und dergleichen verwendet.

Zur Erhöhung der Fälschungssicherheit und zur Verhinderung von Produktpiraterie werden diese Blister mit Sicherheitsmerkmalen versehen. Insbesondere werden die Deckfolien, die im Wesentlichen aus Aluminiumfolien oder Verbunden bestehen, die gegebenenfalls lackiert oder kaschiert sein können, mit Sicherheitsmerkmalen versehen.

Die Behälter, gegen die die Deckfolie zum Verschließen der Behälter kaschiert oder gesiegelt wird, bestehen meist aus einer tiefziehfähigen Folie, aus der die Näpfchen, die zur Aufnahme des Medikaments, oder andere Produkte, geformt werden.
Diese Tiefziehfolie ist bisher, insbesondere im Näpfchenbereich, nicht mit Sicherheitsmerkmalen versehen worden.

Aufgabe der Erfindung war es eine Tiefziehfolie, insbesondere für die Herstellung von Blisterverpackungen bereitzustellen, wobei die Tiefziehfolie zumindest im Näpfchenbereich einen lesbaren Druck aufweist.

Gegenstand der Erfindung ist daher eine Tiefziehfolie, insbesondere eine Bodenfolie zur Herstellung von Blisterverpackungen, **dadurch gekennzeichnet, dass** die Tiefziehfolie im nicht tiefgezogenen Zustand in den Bereichen, die im Folgenden tiefgezogen werden sollen, mit einer Bedruckung versehen ist, die nach dem Tiefziehvorgang lesbar ist.

In einer Ausführungsform kann die Bodenfolie auch in jenen Bereichen, in denen die Folie in ihrem ursprünglichen planen Zustand bleibt, mit einem Sicherheitsmerkmal versehen sein.

Tiefziehfolien, die für den Einsatz zur Herstellung von Blisterverpackungen geeignet sind, sind bekannt. So können beispielsweise Kunststofffolien aus Polyvinylchlorid, Polypropylen, CFF (cold formabale foil eine Kunststoff/Al/Kunststoffverbund) und dergleichen eingesetzt werden.
Die Folien können transparent, transluzent oder opak sein.

Zur Herstellung einer Bedruckung im Bereich der späteren Näpfchen bzw. Behälter, die nach dem Verformen der Folie lesbar wird, wird in einem ersten Schritt auf die Folie eine Gitternetzstruktur aufgedruckt. Der Abstand der Gitternetzlinien voneinander beträgt dabei in Abhängigkeit von der gewünschten Auflösung der nachfolgenden Bedruckung 0,3 - 2 mm, bevorzugt etwa 0.8 bis 1,2 mm.

In einem zweiten Schritt erfolgt die Formung der Näpfchen bzw. Behälter durch Tiefziehen der mit den Gitternetzlinien bedruckten Folie.

In einem dritten Schritt wird dann die Verformung der Gitternetzlinien im Bereich der Näpfchen bzw. Behälter vermessen und in einem weiteren Schritt mittels einer geeigneten Software, beispielsweise "Wrap" von ESRO Artwork, die notwendige Verzerrung der ursprünglichen Bedruckung berechnet.

Mit diesen errechneten Einstellungen kann dann die Tiefziehfolie im ursprünglichen planen Zustand bedruckt werden, wobei der Druck nach der Verformung lesbar bzw. erkennbar wird.

Dabei wird die Toleranz der Tiefziehwerkzeuge ausgeglichen. Da jedes Werkzeug in kleinsten Bereichen unterschiedliche Torleranzen aufweist, sind die Einstellungen für jedes Tiefdruckwerkzeug typisch und unverwechselbar.

Die Bedruckung kann in Form von Zeichen, Bildern, Buchstaben, Buchstabenketten, Zahlen, Symbolen, Logos, Linien, Guillochen und dergleichen vorliegen

Die Bedruckung kann mit jedem bekannten Druckverfahren Tiefdruck, Flexodruck, Siebdruck, Digitaldruck, Curtain Coating, Spin-Coatin, Walzenauftragsverfahren und dergleichen erfolgen.
Zusätzlich kann die Tiefziehfolie in jenen Bereichen, in denen keine Verformung erfolgt, mit einem Sicherheitsmerkmal versehen sein.

Das Sicherheitsmerkmal kann ein bekanntes Sicherheitsmerkmal mit optischen, optisch aktiven, elektrisch leitfähigen oder magnetischen Eigenschaften sein.

Die optischen Eigenschaften einer weiteren Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Zur Einstellung elektrischer Eigenschaften, beispielsweise Leitfähigkeit können beispielsweise Graphit, Ruß, leitfähige organische oder anorganische Polymere. Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO und dergleichen zugegeben werden. Weiters können auch dotierte oder nicht dotierte Halbleiter wie beispielsweise Silicium, Germanium oder Ionenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden. Weiters können auch Schichten aus elektrisch leitfähigen Polymeren aufgebracht werden.

Zur Einstellung der magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) verwendet werden.

Vorzugsweise wird dieses Sicherheitsmerkmal so gewählt, dass es mit einem Sicherheitsmerkmal auf der Deckfolie, mit der die geformte , in diesem Fall transparente Tiefziehfolie verschlossen wird, bei passergenauer Kaschierung bzw. registergenauer Blisterung im korreliert.

Die Deckfolie kann eine Blisterfolie (Metallfolie, beispielsweise eine Aluminiumfolie), eine Verbundfolie (beispielsweise Kunststoff/Metall-Verbunde, Verbunde mit Papier) oder eine Kunststofffolie sein. Die Deckfolie kann auch beispielsweise als Durchdrückfolie oder als abziehbare Folie ausgeführt sein
Im Wesentlichen ergänzen sich dabei die auf der Tiefziehfolie im planen Bereich und auf der Deckfolie aufgebrachten Elemente des Sicherheitsmerkmals nach dem Schlüssel-Schloßprinzip.
So kann beispielsweise die Tiefziehfolie im entsprechenden planen Bereich mit einer geometrischen Form, einem Bild, einem Wasserzeichen oder mit einer Beugungsstruktur bedruckt werden.
Die Deckfolie (Blisterfolie) trägt dann im entsprechenden Bereich eine Bedruckung oder eine Struktur, die die auf der Tiefziehfolie vorhandene Struktur oder das Muster ergänzt.

Ist das auf der Tiefziehfolie vorhandene Sicherheitsmerkmal eine Beugungsstruktur, so kann die Deckfolie, sofern sie als Metallfolie oder Metall/Kunststoffverbundfolie ausgeführt ist, als reflektierende Schicht fungieren, durch die die Beugungsstruktur, beispielsweise als Hologramm sichtbar wird.

Sicherheitselemente mit optisch aktiven Merkmalen, können Beugungsgitter, Beugungsstrukturen, Kinegramme, Hologramme, oder Color-Switch Merkmale sein.

## Patentansprüche

1. Tiefziehfolie, insbesondere eine Bodenfolie zur Herstellung von Blisterverpackungen, **dadurch gekennzeichnet, dass** die Tiefziehfolie im nicht tiefgezogenem Zustand in den Bereichen, die im Folgenden tiefgezogen werden sollen mit einer Bedruckung versehen ist, die nach dem Tiefziehvorgang lesbar ist.

2. Tiefziehfolie nach Anspruch 1, **dadurch gekennzeichnet, dass** die Bedruckung in Form von Zeichen, Buchstaben, Buchstabenketten, Zahlen, Symbolen, Logos, Linien, Guillochen vorliegt.

3. Tiefziehfolie nach einem der Ansprüche 1 oder 2, **dadurch gekennzeichnet, dass** die Folie im planen Bereich ein zusätzliches Sicherheitsmerkmal aufweist.

4. Tiefziehfolie nach Anspruch 3, **dadurch gekennzeichnet, dass**, das Sicherheitsmerkmal auf der Folie im planen Bereich mit einem Sicherheitsmerkmal auf der Deckfolie korreliert.

5. Tiefziehfolie nach Anspruch 4, **dadurch gekennzeichnet, dass** die beiden Sicherheitsmerkmal nach dem Schlüssel-Schlossprinzip miteinander korrelieren.

6. Verfahren zur Herstellung eines Sicherheitsmerkmals auf einer Tiefziehfolie für Blisterverpackungen **gekennzeichnet durch** folgende Schritte
a) Aufdrucken einer Gittemetzlinienbedruckung auf die plane Folie
b) Verformen der Folie
c) Ausmessen der Verzerrungen, die **durch** die Verformung entstanden sind
d) Berechnen der Bedruckungsstrukturen für die plane Folie mittels bekannter Software
e) Bedrucken der planen Folie mit den in Schritt d) berechneten Parametern.
